# EUROPÄISCHE PATENTSCHRIFT

(11) **EP 1 673 915 B1**
(45) Veröffentlichungstag und Bekanntmachung des Hinweises auf die Patenterteilung: **12.12.2007**
(21) Anmeldenummer: 04765951.1
(22) Anmeldetag: 13.10.2004
(51) Int. Cl.: H04L 29/06

(54) **BETRIEBSVERFAHREN FÜR EINEN SERVER UND HIERMIT KORRESPONDIERENDE GEGENSTÄNDE**
OPERATING METHOD FOR A SERVER AND CORRESPONDING OBJECTS
PROCEDE POUR FAIRE FONCTIONNER UN SERVEUR ET OBJETS CORRESPONDANTS

(30) Priorität: 17.10.2003 DE 10349015
(43) Veröffentlichungstag der Anmeldung: 28.06.2006
(73) Patentinhaber: SIEMENS AKTIENGESELLSCHAFT, 80333 München (DE)
(72) Erfinder: DOUIRI, Badreddine, 70193 Stuttgart (DE); GYSSER, Thomas, 71672 Marbach (DE); HACKLÄNDER, Frank, 70599 Stuttgart (DE); PERNOZZOLI, Arno, 71111 Waldenbuch (DE)
(86) Internationale Anmeldenummer: PCT/EP2004/011489
(87) Internationale Veröffentlichungsnummer: WO 2005/038662

(56) Entgegenhaltungen:
- US-A- 5 708 780
- US-A- 5 774 670
- US-A- 6 047 268
- US-A1- 2002 099 936
- DAVID LANE ET AL: "Web Database Applications with PHP & MySQL passage" WEB DATABASE APPLICATION WITH PHP AND MYSQL, XX, XX, März 2002 (2002-03), Seiten 1-26, XP002283237

## Beschreibung

Die vorliegende Erfindung betrifft ein Betriebsverfahren für einen Server, der mit einem Client kommuniziert, wobei der Server, wenn ihm vom Client eine Anforderung für eine Seite übermittelt wird, die angeforderte Seite an den Client übermittelt.

Die vorliegende Erfindung betrifft ferner einen Datenträger mit einem auf dem Datenträger gespeicherten Computerprogramm zur Durchführung eines derartigen Betriebsverfahrens.

Die vorliegende Erfindung betrifft weiterhin einen Server mit einem Massenspeicher, in dem ein Computerprogramm hinterlegt ist, so dass bei Aufruf des Computerprogramms von dem Server Rechner ein derartiges Betriebsverfahren ausführbar ist.

Derartige Verfahren, Computerprogramme und Server sind allgemein bekannt. Sie werden insbesondere bei Web-Anwendungen, z.B. bei Internet- und Intranet-Anwendungen, eingesetzt.

Web-Anwendungen sind relativ anonym. Der Server und der Client wissen in aller Regel sehr wenig voneinander. Insbesondere ist es dem Server in aller Regel nicht möglich, anhand einer Anforderung für eine Seite ohne Weiteres zu ermitteln, von welchem Client ihm diese Anforderung übermittelt wurde und aus welchem Zustand des Clients heraus die Anforderung erfolgte. Jede an der Server gerichtete Anforderung muss daher in der Regel eine vollständige Information über den anfordernden Client und über die angeforderte Seite enthalten.

Um innerhalb einer Sitzung zwischen Server und Client (= Session) serverseitig dennoch gewisse Voreinstellungen (z.B. eine Auswahl einer Sprache, die im Folgenden stets benutzt werden soll) treffen zu können, ist es insbesondere bekannt, dass der Client sich zu Beginn der Sitzung beim Server anmeldet und dieser zusätzlich zur angeforderten Seite eine Anhängseldatei (ein sogenanntes Cookie) an den Client übermittelt. Die Anhängseldatei wird vom Client jeder an diesen Server gerichteten Anforderung beigefügt. Sie wird also vom Client an den Server zurück übermittelt. Die Anhängseldatei ist dabei spezifisch für den Server. Sie wird vom Client also bei jeder an diesen Server gerichteten Anforderung mit an den Server übermittelt. Die Übermittlung der Anhängseldatei erfolgt so lange, bis entweder die Anhängseldatei auf Seiten des Clients gelöscht wird oder vom Server eine neue Anhängseldatei an den Client übermittelt wird, so dass die bisherige Anhängseldatei überschrieben wird.

Die Voreinstellungen, die getroffen werden sollen, können in der Anhängseldatei selbst enthalten sein. Alternativ kann die Anhängseldatei auch einen Link auf einen Speicherbereich im Server enthalten. In diesem Fall sind die Voreinstellungen als solche im Server gespeichert, während sie im erstgenannten Fall im Client gespeichert sind.

Eine Vorgehensweise der obenstehend beschriebenen Art ist beispielsweise aus dem Fachbuch "Web Database Applications with PHP & MySQL" von David Lane et al., März 2002, Kapitel 8, XP002283237, bekannt. Der US 2002/0099936 A1 ist eine ähnliche Vorgehensweise zu entnehmen.

Der Zustand der Sitzung ist üblicherweise an die Sitzung im Sinne der Existenz des korrespondierenden clientseitigen Kommunikationsprogramms, z.B. eines Internetbrowsers wie dem Internetexplorer von Microsoft, gebunden. Die Vorgehensweise des Standes der Technik funktioniert daher problemlos, solange auf Seiten des Clients der Kommunikationsprozess erhalten bleibt und die Kommunikation mit dem Server über ein einziges Fenster erfolgt

Es ist aber allgemein bekannt, dass es möglich ist, in ein und demselben Internetbrowser parallel mehrere Fenster zu nutzen. Die Erzeugung mehrerer Fenster kann z. B. beim Internetexplorer von Microsoft durch Betätigen der Tastenkombination "Steuerung N" oder durch Wählen der Option "Öffnen in neuem Fenster" erfolgen. Auch in diesem Fall bereitet der Standes der Technik noch keine Probleme, wenn auf Seiten des Clients zwar mehrere Fenster genutzt werden, in allen Fenstern aber stets dieselben Voreinstellungen benutzt werden.

Die Vorgehensweise des Standes der Technik versagt aber, wenn auf Seiten des Clients mit mehreren Fenstern gearbeitet wird und in den Fenstern voneinander verschiedene Voreinstellungen getroffen werden sollen. Denn wie bereits erwähnt, ist der Server nicht in der Lage, zu unterscheiden, von welchem der Fenster die jeweilige Anforderung an ihn übermittelt wurde. Dabei hilft auch die Verwendung der Anhängseldatei nicht weiter. Denn ein neues Fenster auf Seiten des Clients ist eben nur ein eigenes Fenster, nicht aber ein eigener Prozess. Somit benutzen die Fenster die gleichen Anhängseldateien.

Die Aufgabe der vorliegenden Erfindung besteht darin, ein Betriebsverfahren für einen Server, ein hiermit korrespondierendes Computerprogramm und den entsprechenden Server zu schaffen, mittels derer derartige Voreinstellungen individuell für jedes clientseitige Fenster vorgenommen werden können.

Die Aufgabe wird durch ein Betriebsverfahren für einen Server, der mit einem Client kommuniziert, dadurch gelöst,
- dass der Server, wenn ihm vom Client eine Anforderung für eine Seite übermittelt wird, die angeforderte Seite an den Client übermittelt,
- dass der Server der Seite Identifizierungsdaten derart beifügt, dass die Identifizierungsdaten bei einer weiteren Anforderung für eine Seite vom Client dann und nur dann an den Server zurück übermittelt werden, wenn die Anforderung auf Seiten des Clients von dieser Übermittlung der Seite ausgeht,
- dass die Identifizierungsdaten zumindest einen für die Übermittlung der Seite spezifischen Übermittlungsidentifizierer umfassen,
- dass der Server die von ihm übermittelten Identifizierungsdaten abspeichert,
- dass der Server bei Erhalt der weiteren Anforderung den von ihm neu übermittelten Übermittlungsidentifizierer anstelle des zurück übermittelten Übermittlungsidentifizierers abspeichert, wenn der zurück übermittelte Übermittlungsidentifizierer mit einem abspeicherten Übermittlungsidentifizierer übereinstimmt, und
- dass der Server bei Erhalt der weiteren Anforderung den von ihm neu übermittelten Übermittlungsidentifizierer zusätzlich zum zurück übermittelten Übermittlungsidentifizierer abspeichert, wenn der zurück übermittelte Übermittlungsidentifizierer mit keinem zuvor abspeicherten Übermittlungsidentifizierer übereinstimmt.

Durch diese Vorgehensweise kann der Server nämlich zwar noch nicht erkennen, wenn auf Seiten des Clients ein zweites Fenster geöffnet wird (dazu später). Er kann aber erkennen, wenn ihm vom Client "veraltete" Identifizierungsdaten übermittelt werden. Anhand dieses Umstands, nämlich dass die Identifizierungsdaten bereits veraltet bzw. überholt sind, kann er daher erkennen, dass ein zweites Fenster geöffnet worden sein muss. Ab dem Zeitpunkt dieser Erkenntnis ist der Server somit in der Lage, dieses zweite Fenster getrennt vom ersten Fenster zu verwalten.

Der Übermittlungsidentifizierer kann im einfachsten Fall eine laufende Nummer oder dergleichen sein. Vorzugsweise aber ist der Übermittlungsidentifizierer ein weltweit einmaliger Identifikator. Beispielsweise kann der Übermittlungsidentifizierer ein sogenannter GUID sein. Ein GUID (global universal identifier) wird auf die - in der Regel auf eine Millisekunde genaue - Zeit des Servers sowie Identifikationsdaten des Servers gebildet, beispielsweise eine nur einmal vergebene Identifikationsnummer der Netzwerkkarte des Servers oder des Prozessors des Servers.

Durch die erfindungsgemäße Vorgehensweise ist es beispielsweise möglich, dass den Identifizierungsdaten Selektionsdaten zugeordnet sind und dass im Falle der Übereinstimmung des zurück übermittelten Übermittlungsidentifizierers mit einem der abgespeicherten Übermittlungsidentifizierer die vom Server auf Grund der weiteren Anforderung neu an den Client übermittelte Seite von den dem übereinstimmenden Übermittlungsidentifizierer zugeordneten Selektionsdaten abhängt.

Im Falle der Übereinstimmung des zurück übermittelten Übermittlungsidentifizierers mit keinem der abgespeicherten Übermittlungsidentifizierer sind verschiedene Vorgehensweisen möglich. So kann beispielsweise eine vorbestimmte Startseite an den Client übermittelt werden. Vorzugsweise aber hängt die vom Server auf Grund der weiteren Anforderung neu an den Client übermittelte Seite von den einem der abgespeicherten Übermittlungsidentifizierer zugeordneten Selektionsdaten ab. Diese Selektionsdaten ordnet der Server dann selbstverständlich auch dem zusätzlich abgespeicherten Übermittlungsidentifizierer zu.

Vorzugsweise umfassen die Identifizierungsdaten auch einen Fensteridentifizierer. Im Falle der Übereinstimmung des zurück übermittelten Übermittlungsidentifizierer mit einem der abgespeicherten Übermittlungsidentifizierer wird in diesem Fall der Fensteridentifizierer beibehalten. Wenn hingegen der zurück übermittelte Übermittlungsidentifizierer mit keinem der abgespeicherten Übermittlungsidentifizierer übereinstimmt, ordnet der Server dem zusätzlich abgespeicherten Übermittlungsidentifizierer einen neuen Fensteridentifizierer zu.

Auf Grund dieser Vorgehensweise ist insbesondere eine effiziente Verwaltung von mehr als zwei clientseitigen Fenstern möglich. Denn auf Grund dieser Vorgehensweise ist für den Server erkennbar, welches Fenster clientseitig dupliziert wurde.

Auf Grund dieser Vorgehensweise ist es weiterhin möglich, dass im Falle der Übereinstimmung des zurück übermittelten Übermittlungsidentifizierers mit keinem der abgespeicherten Übermittlungsidentifizierer die vom Server auf Grund einer weiteren Anforderung neu an den Client übermittelte Seite von den Selektionsdaten abhängt, die demjenigen der abgespeicherten Übermittlungsidentifizierer zugeordnet sind, dessen Fensteridentifizierer mit dem zurück übermittelten Fensteridentifizierer übereinstimmt.

Der neue Fensteridentifizierer kann - analog zum Übermittlungsidentifizierer - im einfachsten Fall wieder eine laufende Nummer sein. Vorzugsweise ist aber auch er als GUID ausgebildet. Dabei kann er alternativ als eigenständig generierter GUID ausgebildet sein oder mit dem unmittelbar zuvor generierten Übermittlungsidentifizierer identisch sein.

Der Server verwaltet die Identifizierungsdaten vorzugsweise in Form einer Tabelle, die pro Zeile die Einträge Fensteridentifizierer, Übermittlungsidentifizierer und Selektionsdaten enthält. Anstelle der Selektionsdaten selbst kann in der Tabelle selbstverständlich auch ein Verweis (= Pointer) auf die Selektionsdaten gespeichert sein.

Die Prüfungsreihenfolge (erst die Übermittlungsidentifizierer oder erst die Fensteridentifizierer) ist prinzipiell in das Belieben des Fachmanns gestellt. Vorzugsweise wird aber zuerst der Fensteridentifizierer überprüft und dann der für diesen Fensteridentifizierer gespeicherte Übermittlungsidentifizierer. Denn der vom Client zurück übermittelte Fensteridentifizierer ist stets abgespeichert. Der vom Client zurück übermittelte Übermittlungsidentifizierer hingegen könnte bereits überschrieben sein.

Bei Web-Anwendungen sind im Wesentlichen zwei Arten der Anforderungsübermittlung bekannt, nämlich die sogenannten Post-Requests und die sogenannten Get-Requests.

Post-Requests beruhen auf dem Prinzip, dass der Client Eingabefelder der Seite ausfüllt und dann die ausgefüllten Eingabefelder vom Client an den Server zurück übermittelt werden. Bei Post-Requests werden dabei vom Client stets alle Eingabefelder an den Server zurück übermittelt. Die übermittelten Daten enthalten unter anderem die Anforderung für die neue Seite. Für eine im Sinne der vorliegenden Erfindung ordnungsgemäße serverseitige Behandlung solcher Post-Requests ist es daher beispielsweise möglich, dass der Server die Identifizierungsdaten der übermittelten Seite als versteckte, auf Seiten des Clients nicht mit angezeigte Eingabefelder beifügt. Erfindungsgemäß werden also der Seite versteckte Eingabefelder beigefügt, die bei einer üblichen Darstellung der Seite in einem Fenster des Clients nicht mit angezeigt werden. In diesen Eingabefeldern sind von Seiten des Servers bereits vorab die Identifizierungsdaten hinterlegt worden. Sie werden daher vom Client an den Server zurück übermittelt, wenn der Client einen Post-Request sendet.

Bei Get-Requests hingegen wird vom Client unmittelbar eine Linkadresse, in der Regel eine sogenannte URL, an den Server zurück übermittelt. Die Linkadresse ist dabei Bestandteil der zuvor übermittelten Seite und wird in dem Fenster, in dem der Client die Seite darstellt, als solche mit angezeigt. Selektiert der Benutzer des Clients diese Linkadresse, stellt die Linkadresse selbst und unmittelbar eine Anforderung für eine weitere Seite dar.

Wenn die Seite mindestens eine derartige Adresse für eine weitere Seite enthält, kann eine im Sinne der vorliegenden Erfindung ordnungsgemäße serverseitige Behandlung eines solchen Get-Requests dadurch erreicht werden, dass der Server die Identifizierungsdaten der übermittelten Seite als der Adresse zugeordnete Parameter, sogenannte Query-Parameter, beifügt.

Ein Spezialfall einer Reaktion des Servers auf den Erhalt einer Anforderung ist ein sogenannter serverseitiger Response-Redirect. Ein serverseitiger Response-Redirect liegt vor, wenn der Server auf Grund einer an ihn übermittelten Anforderung nicht die angeforderte Seite an den Client übermittelt, sondern bei Erhalt der weiteren Anforderung zunächst eine dritte, vom Client wieder an den Server zurück zu sendende Anforderung an den Client übermittelt. Erst auf Grund der Übermittlung der dritten Anforderung an den Server übermittelt der Server dann die angeforderte Seite. In diesem Fall gibt es zwei Möglichkeiten, serverseitig eine im Sinne der vorliegenden Erfindung ordnungsgemäße Behandlung der Anforderung zu gewährleisten.

Zum einen ist es möglich, dass der Server die Identifizierungsdaten der dritten Anforderung als zugeordnete Parameter beifügt. In diesem Fall werden die Identifizierungsdaten der Anforderung selbst beigefügt. Alternativ ist es auch möglich, dass der Server die Identifizierungsdaten der dritten Anforderung als Anhängseldatei beifügt, die vom Client nicht der dritten Anforderung an den Server zurück übermittelt mit. In diesem Fall fügt der Server die Identifizierungsdaten der dritten Anforderung also als sogenanntes Transfercookie bei. Die Identifizierungsdaten sind der Seite dabei wie auch bei Post-Requests als versteckte Daten beigefügt. Das Programm extrahiert die Identifizierungsdaten und fügt sie in die Anhängseldatei ein. Weiterhin übermittelt der Server zusammen mit der Seite, die er auf Grund der dritten Anforderung an den Client übermittelt, einen Löschbefehl für diese Anhängseldatei an den Client.

Es gibt Sprachen, bei denen den vom Server an den Client übermittelten Seiten Programme beigefügt bzw. die Programme in diese Seiten eingebettet sein können. Ein Beispiel einer solchen Sprache ist JavaScript. In diesem Fall gibt es eine weitere Möglichkeit, zu gewährleisten, dass die Identifizierungsdaten zusammen mit der Anforderung vom Client an den Server übermittelt werden. Denn in diesem Fall ist es möglich, dass der Server die Identifizierungsdaten der Seite dadurch beifügt, dass er der Seite ein Programm beifügt, auf Grund dessen der Client einer Anforderung für eine Seite dann und nur dann eine die Identifizierungsdaten enthaltende Anhängseldatei beifügt, wenn die Anforderung von dieser Übermittlung der Seite ausgeht.

In diesem Fall wird also ebenfalls ein sogenanntes Transfercookie erzeugt. Die Erzeugung des Transfercookies erfolgt aber im Gegensatz zum Response-Redirect nicht serverseitig, sondern clientseitig.

Der Server kann nicht unmittelbar erkennen, wenn auf Seiten des Clients eine Duplizierung einer bereits an den Client übertragenen Seite erfolgt. Wenn daher der Benutzer des Clients eine Seite dupliziert und danach längere Zeit mit nur einer der beiden Versionen der duplizierten Seite arbeitet, die andere Version der duplizierten Seite aber nicht verändert, bleibt diese andere Version vorerst unverändert erhalten. Wenn der Benutzer des Clients dann zu einem erheblich späteren Zeitpunkt von der anderen, noch unveränderten Version der duplizierten Seite eine Anforderung an den Server sendet, übernimmt der Server in diesem Fall die Selektionsdaten, die der veränderten Version der duplizierten Seite zu diesem Zeitpunkt zugeordnet sind. Die Selektionsdaten können zu diesem Zeitpunkt aber bereits erheblich geändert worden sein. Die Restaurierung des vom Benutzer eigentlich gewünschten Zustands der anderen Version der duplizierten Seite kann für den Benutzer daher relativ aufwändig sein. Aus diesem Grund ist es von Vorteil, so früh wie möglich zu erkennen, wenn auf Seiten des Clients eine bereits an diesen übermittelte Seite dupliziert wird.

Ein sofortiges Erkennen eines solchen Duplizierens ist dadurch möglich,
- dass der Server der Seite auch eine Variable mit einem Anfangswert und ein vom Client beim Darstellen der Seite in einem Fenster auszuführendes Programm beifügt,
- dass der Client auf Grund des Programms den Wert der Variable, wenn sie den Anfangswert aufweist, abändert und
- dass der Client auf Grund des Programms die vorherige Anforderung zur Übermittlung der Seite wiederholt, so dass der Client, wenn die Variable nicht den Anfangswert aufweist, die bei der vorherigen Anforderung übermittelten Identifizierungsdaten ein zweites Mal an den Server übermittelt.

Denn dann wiederholt der Client die vorherige Anforderung sofort beim Duplizieren der Seite, so dass der Server die Duplizierung als solche sofort erkennen kann. Der Server erkennt bei dieser Vorgehensweise zwar auch dann (fälschlicherweise) eine Duplizierung, wenn der Benutzer des Clients - ohne die Seite zu duplizieren - diese nur aktualisiert oder auf eine clientseitig noch gespeicherte, in diesem Fenster aber nicht mehr angezeigte Seite zurück greift. Dies ist aber unkritisch, da in diesem Fall auf Seiten des Servers lediglich ein Fenster verwaltet wird, das auf Seiten des Clients in der Realität gar nicht existent ist. Hingegen kann es nicht geschehen, dass auf Seiten des Clients ein Fenster dupliziert wird und der Server dies nicht erkennt. Die Anforderung kann dabei je nach Anwendungsfall in Form eines Post- oder in Form eines Get-Requests an den Server übermittelt werden. Dies gilt auch dann, wenn das erstmalige Laden der Seite auf Grund eines Post-Requests erfolgte.

Das erfindungsgemäße Betriebsverfahren ist als Computerprogramm realisiert, das dem Server zugeführt wird. Das Computerprogramm wird dem Server dabei über einen Datenträger zugeführt. Beispiele eines derartigen Datenträgers sind eine CD-ROM oder eine Streamerkassette. Auf dem Datenträger ist das Computerprogramm in (ausschließlich) maschinenlesbarer Form gespeichert. Das Computerprogramm kann auf dem Datenträger dabei alternativ in komprimierter oder in unkomprimierter Form gespeichert sein.

Der Datenträger mit dem darauf gespeicherten Computerprogramm wird in ein Lesegerät eingeführt, mittels dessen der Server das auf dem Datenträger gespeicherte Computerprogramm lesen kann. Er liest daher das Computerprogramm vom Datenträger aus und speichert es in einem Massenspeicher ab, beispielsweise auf einer Festplatte. Bei Aufruf des Computerprogramms von der Festplatte (alternativ auch vom Datenträger) ist der Server daher in der Lage, das erfindungsgemäße Betriebsverfahren auszuführen.

Weitere Vorteile und Einzelheiten ergeben sich aus der nachfolgenden Beschreibung eines Ausführungsbeispiels in Verbindung mit den Zeichnungen. Dabei zeigen
- FIG 1: einen Rechnerverbund,
- FIG 2: ein Ablaufdiagramm,
- FIG 3: eine Tabelle und
- FIG 4 bis 7: weitere Ablaufdiagramme.

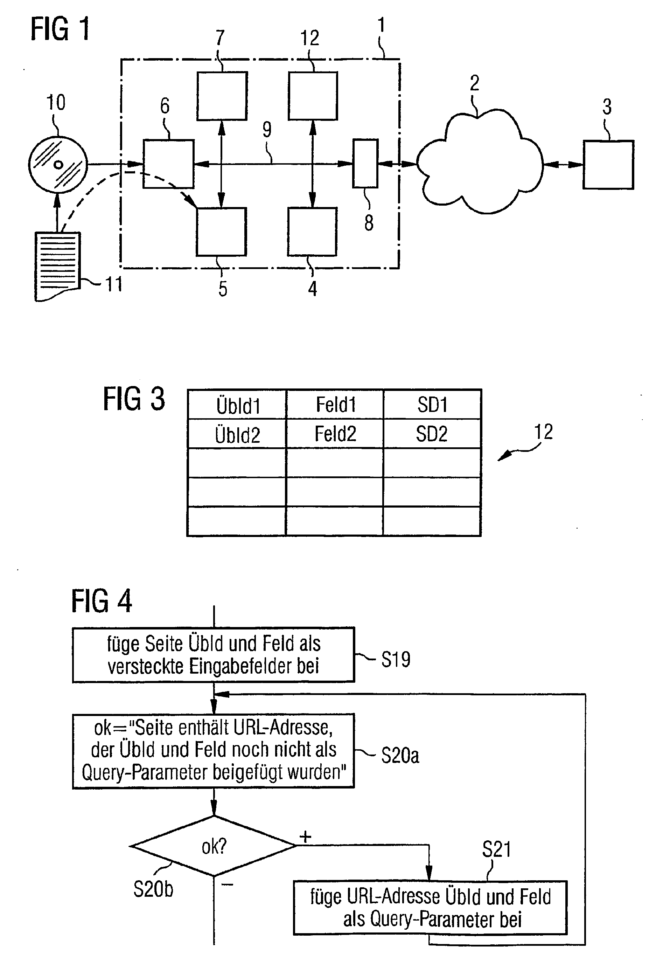

Gemäß FIG 1 ist ein Server 1 über eine Rechner-Rechner-Verbindung 2 mit einem Client 3 datentechnisch verbunden. Die Rechner-Rechner-Verbindung 2 kann dabei auf verschiedene Art ausgebildet sein. In der Regel ist sie jedoch als Internet- oder als Intranet-Verbindung ausgebildet. Über die Rechner-Rechner-Verbindung 2 können der Server 1 und der Client 3 gemäß einem Web-Protokoll miteinander kommunizieren.

Der Server 1 weist, wie allgemein üblich, mehrere Komponenten 4 bis 8 auf, die über einen Bus 9 miteinander verbunden sind. Die Komponenten 4 bis 8 umfassen insbesondere einen Prozessor 4, einen Massenspeicher 5 (typisch eine oder mehrere Festplatten), ein Lesegerät 6, einen Zeitgeber 7 und eine Netzwerkkarte 8.

In das Lesegerät 6 ist ein Datenträger 10 einführbar, auf dem in ausschließlich maschinenlesbarer Form ein Computerprogramm 11 gespeichert ist. Dieses Computerprogramm 11 wird von dem Datenträger 10 ausgelesen und, wie in FIG 1 gestrichelt angedeutet ist, im Massenspeicher 5 hinterlegt. Bei Aufruf des Computerprogramms 11 ist der Server 1 daher in der Lage, das Computerprogramm 11 auszuführen. Bei Aufruf des Computerprogramms 11 führt der Server 1 dabei ein Betriebsverfahren aus, das nachfolgend in Verbindung mit FIG 2 näher beschrieben wird.

Gemäß FIG 2 nimmt der Server 1 in einem Schritt S1 vom Client 3 eine Anmeldung und eine erste Anforderung für eine Seite entgegen. Der Server 1 ermittelt daraufhin in einem Schritt S2 einen Übermittlungsidentifizierer ÜbId. Der Übermittlungsidentifizierer ÜbId ist dabei vorzugsweise weltweit einmalig. Beispielsweise kann er aus einer Kombination der vom Zeitgeber 7 ausgegebenen Zeit und dem Code der Netzwerkkarte 8 und/oder des Prozessors 4 bestehen.

In einem Schritt S3 wird sodann ein Fensteridentifizierer FeId gleich dem soeben ermittelten Übermittlungsidentifizierer ÜbId gesetzt. Die beiden Identifizierer ÜbId, FeId werden sodann - siehe ergänzend FIG 3 - in einem Schritt S4 in die erste Zeile einer Tabelle 12 eingetragen. Gemäß FIG 3 können dabei jeder Zeile der Tabelle 12 außer den beiden Identifizierern ÜbId, FeId auch noch Selektionsdaten SD zugeordnet werden. Auf die Bedeutung der Selektionsdaten SD wird nachstehend noch eingegangen werden.

In einem Schritt S5 fügt der Server 1 der angeforderten Seite die Identifizierungsdaten FeId, ÜbId bei. Die Beifügung erfolgt dabei derart, dass die Identifizierungsdaten FeId, ÜbId bei einer weiteren Anforderung für eine Seite vom Client 3 dann und nur dann an den Server 1 zurück übermittelt werden, wenn die Anforderung auf Seiten des Clients 3 von der Übermittlung dieser Seite ausgeht.

Gemäß einem Schritt S6 fügt der Server 1 weiterhin der angeforderten Seite eine Variable und ein Programm bei. Die Variabel weist einen Anfangswert auf. Das Programm ist derart ausgestaltet, dass es bei einem clientseitigen Kopieren der übertragenen Seite eine Neuanforderung der bisherigen Seite auslöst. Hierauf wird später noch näher eingegangen werden. Der Schritt S6 ist dabei nur optional und daher in FIG 2 nur gestrichelt dargestellt. In einem Schritt S7 übermittelt der Server 1 sodann die angeforderte Seite einschließlich der dieser Seite beigefügten Informationen an den Client 3. Bei den beigefügten Informationen handelt es sich insbesondere um die beiden beigefügten Identifizierer ÜbId, FeId, deren Ergänzungen sowie die Variable und das Programm.

In einem Schritt S8 nimmt der Server 1 vom Client 3 eine weitere Eingabe entgegen. Der Server 1 überprüft daraufhin zunächst in einem Schritt S9, ob der Client 3 sich abgemeldet hat. Wenn dies der Fall ist, löscht er in einem Schritt S10 die Tabelle 12 und beendet die Ausführung des Verfahrens.

Wenn die Eingabe des Schrittes S8 keine Abmeldung war, war sie eine neue Anforderung. In diesem Fall extrahiert der Server 1 aus der übermittelten Anforderung die zurück übermittelten Identifizierer ÜbId, FeId sowie die Selektionsdaten SD.

In einem Schritt S12 überprüft der Server 1 sodann, ob der zurück übermittelte Übermittlungsidentifizierer ÜbId mit dem Übermittlungsidentifizierer ÜbId übereinstimmt, der in der Tabelle 12 dem zurück übermittelten Fensteridentifizierer FeId zugeordnet ist. Der besseren Übersichtlichkeit halber ist der Schritt S12 in FIG 2 dabei in zwei Teilschritte S12a, S12b aufgeteilt. Im Teilschritt S12a wird eine logische Variable entsprechend der vorzunehmenden Prüfung belegt, im Teilschritt S12b die logische Variable abgefragt.

Wenn im Schritt S12 eine Übereinstimmung ermittelt wurde, geht die vom Client 3 übermittelte Anforderung von einem serverseitig bereits erfassten und verwalteten Fenster des Clients 3 aus. In diesem Fall wird in einem Schritt S13 analog zum Schritt S2 ein neuer Übermittlungsidentifizierer ÜbId ermittelt und in der Tabelle 12 in der Zeile abgespeichert, in der auch der zurück übermittelte Fensteridentifizierer FeId abgespeichert ist. Der Server 1 speichert also den neu ermittelten Übermittlungsidentifizierer ÜbId anstelle des zurück übermittelten Übermittlungsidentifizierer ÜbId in der Tabelle 12 ab.

Wenn im Schritt S12 hingegen keine Übereinstimmung festgestellt wurde, wird ein Schritt S14 ausgeführt. Im Schritt S14 wird ebenfalls der Übermittlungsidentifizierer ÜbId analog zur Vorgehensweise von Schritt S2 neu ermittelt. Sodann wird aber der Fensteridentifizierer FeId analog zum Schritt S3 gleich dem soeben neu ermittelten Übermittlungsidentifizierer ÜbId gesetzt. Beide Identifizierer FeId, ÜbId werden vom Server 1 in eine neue Zeile der Tabelle 12 eingetragen. Ferner werden im Rahmen des Schrittes S14 noch die Selektionsdaten SD, die dem zurück übermittelten Fensteridentifizierer FeId zugeordnet sind, in die nunmehr neu belegte Zeile der Tabelle 12 kopiert.

Falls der Server 1 neue Selektionsdaten SD erhalten hat, ändert er ferner in einem Schritt S15 die Selektionsdaten SD ab, die dem aktuellen Fensteridentifizierer FeId zugeordnet sind. Je nach dem, ob auf Grund der Prüfung im Schritt S12 der Schritt S13 oder der Schritt S14 durchlaufen wurde, handelt es sich dabei um den zurück übermittelten Fensteridentifizierer FeId oder um den neu ermittelten Fensteridentifizierer FeId.

In einem Schritt S16 überprüft der Server 1 als nächstes, ob er die angeforderte Seite direkt übermitteln kann oder ob er ein sogenanntes Response-Redirect durchführen muss. Wenn er ein Response-Redirect durchführen muss, führt er einen Schritt S17 aus, in dem er eine neue Adresse, in der Regel eine URL-Adresse zuzüglich des aktuellen Fensteridentifizierers FeId und des aktuellen Übermittlungsidentifizierers ÜbId an den Client 3 übermittelt. Sodann springt er zum Schritt S8 zurück.

Anderenfalls ermittelt der Server 1 anhand der Selektionsdaten, die dem aktuellen Fensteridentifizierer FeId und dem aktuellen Übermittlungsidentifizierer ÜbId in der Tabelle 12 zugeordnet sind, welche Seite an den Client 3 übermittelt werden soll. Alternativ oder ergänzend kann auch der Inhalt der Seite modifiziert werden. Sodann springt der Server 1 zum Schritt S5 zurück.

FIG 4 zeigt eine erste Möglichkeit, die Identifizierungsdaten ÜbId, FeId der zu übermittelnden Seite beizufügen. Gemäß FIG 4 fügt der Server 1 der Seite die Identifizierer ÜbId, FeId in einem Schritt S19 zunächst als versteckte Eingabefelder bei. Dadurch ergibt sich die Wirkung, dass die Identifizierer ÜbId und FeId bei jedem Post-Request des Clients 3, der von dieser Seite ausgeht, vom Client 3 an den Server 1 übermittelt werden.

In einem Schritt S20 überprüft der Server 1 sodann, ob die zu übermittelnde Seite eine URL-Adresse enthält, der die Identifizierer ÜbId und FeId noch nicht als Query-Parameter beigefügt wurden. Wenn dies der Fall ist, führt der Server 1 einen Schritt S21 aus, indem er dieser Adresse die Identifizierer ÜbId und FeId als Query-Parameter beifügt. Vom Schritt S21 geht der Server dann zum Schritt S20 zurück. Der Schritt S20 ist dabei in FIG 4 - analog zum Schritt S12 von FIG 2 - in zwei Teilschritte unterteilt.

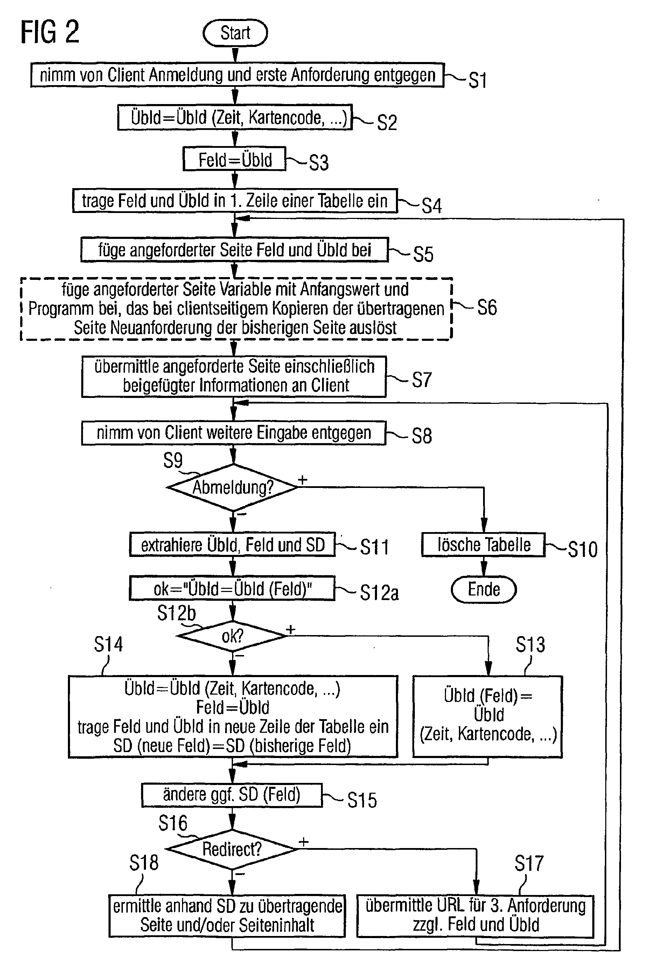

FIG 5 zeigt eine weitere Möglichkeit, die Identifizierungsdaten ÜbId, Feld der Seite beizufügen. Gemäß FIG 5 fügt der Server 1 der Seite die Identifizierer ÜbId und FeId als versteckte Daten bei. Dabei kann es sich - analog zum Schritt S19 von FIG 4 - um versteckte Eingabefelder handeln. Dies ist aber nicht zwingend erforderlich. Sodann fügt der Server 1 der Seite ein Programm bei, das bei einer Anforderung des Clients 3, die von dieser Seite ausgeht, ausgeführt wird. Auf Grund des Programms extrahiert dann der Client 3 aus dieser Seite die Identifizierungsdaten ÜbId, FeId und bindet sie in ein von ihm zu kreierendes Cookie ein. Das Cookie sendet der Client 3 zusammen mit der Anforderung an den Server 1.

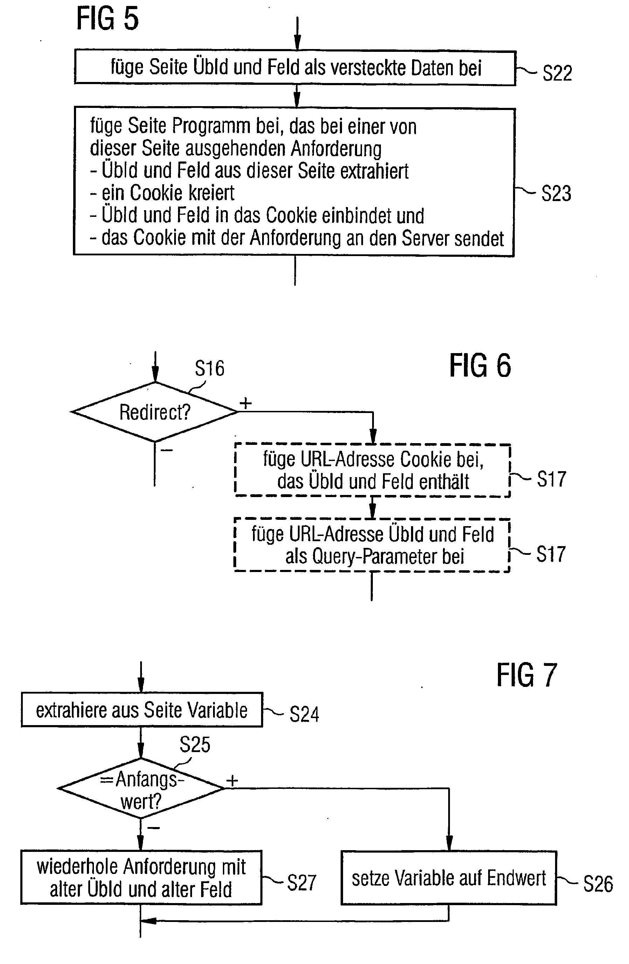

FIG 6 zeigt die Möglichkeiten, die bestehen, um den Schritt S17 von FIG 2, in dem die Identifizierer FeId und ÜbId der zu übermittelnden URL beigefügt werden, zu implementieren. Gemäß FIG 6 ist es möglich, den Schritt S17 derart auszugestalten, dass die Identifizierer ÜbId und FeId - analog zum Schritt S21 von FIG 4 - der URL-Adresse als Query-Parameter beigefügt werden. Alternativ ist es möglich, dass der Server 1 im Schritt S17 der URL-Adresse eine Anhängseldatei (Cookie) beifügt, welche die Identifizierer ÜbId, FeId enthält. In diesem letzteren Fall sollten die im Schritt S7 (siehe FIG 2) der angeforderten Seite beigefügten Informationen an den Client 3 einen Löschbefehl enthalten, auf Grund dessen diese Anhängseldatei auf Seiten des Clients 3 sofort wieder gelöscht wird.

Von den in FIG 6 dargestellten Schritten S17 wird stets nur einer ausgeführt. Die beiden Schritte S17 sind daher in FIG 6 gestrichelt dargestellt.

FIG 7 zeigt nun der Vollständigkeit halber das Verfahren, das der Client 3 auf Grund des Programms ausführt, das vom Server 1 im Rahmen des Schrittes S6 (siehe FIG 2) der angeforderten Seite beigefügt wird. Das Programm wird dabei vom Client 3 stets ausgeführt, wenn die Seite von ihm in einem Fenster dargestellt wird. Das Programm wird also sowohl dann ausgeführt, wenn der Client 3 die Seite erstmals erhält, als auch dann, wenn der Client 3 die Seite beispielsweise mit "Steuerung N" dupliziert.

Gemäß FIG 7 extrahiert der Client 3 zunächst aus der Seite die übermittelte Variable. In einem Schritt S25 überprüft er dann, ob die Variable noch ihren Anfangswert hat. Wenn dies der Fall ist, setzt er die Variable in einem Schritt S26 auf ihren Endwert. Der Endwert muss dabei selbstverständlich vom Anfangswert verschieden sein. Ansonsten kann er beliebig gewählt sein. Wenn die Prüfung im Schritt S25 keine Übereinstimmung ergeben hat, führt der Client 3 einen Schritt S27 aus, in dem er die vorherige Anforderung wiederholt. Die Wiederholung der Anforderung bewirkt dabei insbesondere, dass die bereits an den Server 1 zurück übermittelten Identifizierungsdaten ÜbId, FeId ein zweites Mal an den Server 1 übermittelt werden. Dadurch ist dann der Server 1 sofort in der Lage, zu erkennen, dass clientseitig ein neues Fenster geöffnet wurde.

Mittels des erfindungsgemäßen Betriebsverfahrens ist es somit auf einfache Weise möglich, dass der Server 1 individuell mehrere Fenster des Clients 3 verwaltet.

## Patentansprüche

1. Betriebsverfahren für einen Server (1), der mit einem Client (3) kommuniziert,
- wobei der Server (1), wenn ihm vom Client (3) eine Anforderung für eine Seite übermittelt wird, die angeforderte Seite an den Client (3) übermittelt,
- wobei der Server (1) der Seite Identifizierungsdaten (ÜbId, FeId) derart beifügt, dass die Identifizierungsdaten (ÜbId, FeId) bei einer weiteren Anforderung für eine Seite vom Client (3) dann und nur dann an den Server (1) zurück übermittelt werden, wenn die Anforderung auf Seiten des Clients (3) von dieser Übermittlung der Seite ausgeht,
- wobei die Identifizierungsdaten (ÜbId, FeId) zumindest einen für die Übermittlung der Seite spezifischen Übermittlungsidentifizierer (ÜbId) umfassen,
- wobei der Server (1) die von ihm übermittelten Identifizierungsdaten (ÜbId) abspeichert,
- wobei der Server (1) bei Erhalt der weiteren Anforderung den von ihm neu übermittelten Übermittlungsidentifizierer (ÜbId) anstelle des zurück übermittelten Übermittlungsidentifizierers (ÜbId) abspeichert, wenn der zurück übermittelte Übermittlungsidentifizierer (ÜbId) mit einem abspeicherten Übermittlungsidentifizierer (ÜbId) übereinstimmt, und
- wobei der Server (1) bei Erhalt der weiteren Anforderung den von ihm neu übermittelten Übermittlungsidentifizierer (ÜbId) zusätzlich zum zurück übermittelten Übermittlungsidentifizierer (ÜbId) abspeichert, wenn der zurück übermittelte Übermittlungsidentifizierer (ÜbId) mit keinem zuvor abspeicherten Übermittlungsidentifizierer (ÜbId) übereinstimmt.

2. Betriebsverfahren nach Anspruch 1,
**dadurch gekennzeichnet,**
**dass** den Identifizierungsdaten (ÜbId, FeId) Selektionsdaten (SD) zugeordnet sind und dass im Falle der Übereinstimmung des zurück übermittelten Übermittlungsidentifizierers (ÜbId) mit einem der abgespeicherten Übermittlungsidentifizierer (ÜbId) die vom Server (1) auf Grund der weiteren Anforderung neu an den Client (3) übermittelte Seite von den dem übereinstimmenden Übermittlungsidentifizierer (ÜbId) zugeordneten Selektionsdaten (SD) abhängt.

3. Betriebsverfahren nach Anspruch 2,
**dadurch gekennzeichnet,**
**dass** im Falle der Übereinstimmung des zurück übermittelten Übermittlungsidentifizierers (ÜbId) mit keinem der abgespeicherten Übermittlungsidentifizierer (ÜbId) die vom Server (1) auf Grund der weiteren Anforderung neu an den Client (3) übermittelte Seite von den einem der abgespeicherten Übermittlungsidentifizierer (ÜbId) zugeordneten Selektionsdaten (SD) abhängt und dass der Server (1) diese Selektionsdaten (SD) dem zusätzlich abgespeicherten Übermittlungsidentifizierer (ÜbId) zuordnet.

4. Betriebsverfahren nach Anspruch 1, 2 oder 3,
**dadurch gekennzeichnet,**
- **dass** die Identifizierungsdaten (ÜbId, FeId) auch einen Fensteridentifizierer (FeId) umfassen,
- **dass** der Server (1) im Falle der Übereinstimmung des zurück übermittelten Übermittlungsidentifizierers (ÜbId) mit einem der abgespeicherten Übermittlungsidentifizierer (ÜbId) den Fensteridentifizierer (FeId) des übereinstimmenden Übermittlungsidentifizierers (ÜbId) beibehält und
- **dass** der Server im Falle der Übereinstimmung des zurück übermittelten Übermittlungsidentifizierers (ÜbId) mit keinem der abgespeicherten Übermittlungsidentifizierer (ÜbId) dem zusätzlich abspeicherten Übermittlungsidentifizierer (ÜbId) einen neuen Fensteridentifizierer (FeId) zuordnet.

5. Betriebsverfahren nach Anspruch 3 und 4,
**dadurch gekennzeichnet,**
**dass** im Falle der Übereinstimmung des zurück übermittelten Übermittlungsidentifizierers (ÜbId) mit keinem der abgespeicherten Übermittlungsidentifizierer (ÜbId) die vom Server (1) auf Grund einer weiteren Anforderung neu an den Client (3) übermittelte Seite von den Selektionsdaten (SD) abhängt, die demjenigen der abgespeicherten Übermittlungsidentifizierer (ÜbId) zugeordnet sind, dessen Fensteridentifizierer (FeId) mit dem zurück übermittelten Fensteridentifizierer (FeId) übereinstimmt.

6. Betriebsverfahren nach einem der obigen Ansprüche,
**dadurch gekennzeichnet,**
**dass** der Server (1) die Identifizierungsdaten (ÜbId, FeId) der übermittelten Seite als versteckte, auf Seiten des Clients (3) nicht mit angezeigte Eingabefelder beifügt.

7. Betriebsverfahren nach einem der obigen Ansprüche,
**dadurch gekennzeichnet,**
**dass** die Seite mindestens eine Adresse für eine weitere Seite enthält und dass der Server (1) die Identifizierungsdaten (ÜbId, FeId) der übermittelten Seite als der Adresse zugeordnete Parameter beifügt.

8. Betriebsverfahren nach einem der obigen Ansprüche,
**dadurch gekennzeichnet,**
**dass** der Server (1) bei Erhalt der weiteren Anforderung zunächst eine dritte, vom Client (3) wieder an den Server (1) zurück zu sendende Anforderung an den Client (3) übermittelt und dass der Server (1) die Identifizierungsdaten (ÜbId, FeId) der dritten Anforderung als zugeordnete Parameter beifügt.

9. Betriebsverfahren nach einem der obigen Ansprüche,
**dadurch gekennzeichnet,**
**dass** der Server (1) bei Erhalt der weiteren Anforderung zunächst eine dritte, vom Client (3) wieder an den Server (1) zurück zu sendende Anforderung an den Client (3) übermittelt, dass der Server (1) die Identifizierungsdaten (ÜbId, FeId) der dritten Anforderung als Anhängseldatei beifügt, die vom Client (3) mit der dritten Anforderung an den Server (1) zurück übermittelt wird, und dass der Server (1) zusammen mit der auf Grund der dritten Anforderung an den Client (3) übermittelten Seite einen Löschbefehl für diese Anhängseldatei an den Client (3) übermittelt.

10. Betriebsverfahren nach einem der obigen Ansprüche,
**dadurch gekennzeichnet,**
**dass** der Server (1) die Identifizierungsdaten (ÜbId, FeId) der Seite **dadurch** beifügt, dass er der Seite ein Programm beifügt, auf Grund dessen der Client (3) einer Anforderung für eine Seite dann und nur dann eine die Identifizierungsdaten (ÜbId, FeId) enthaltende Anhängseldatei beifügt, wenn die Anforderung von dieser Übermittlung der Seite ausgeht.

11. Betriebsverfahren nach einem der obigen Ansprüche,
**dadurch gekennzeichnet,**
- **dass** der Server (1) der Seite auch eine Variable mit einem Anfangswert und ein vom Client (3) beim Darstellen der Seite in einem Fenster auszuführendes Programm beifügt,
- **dass** der Client (3) auf Grund des Programms den Wert der Variable, wenn sie den Anfangswert aufweist, abändert und
- **dass** der Client (3) auf Grund des Programms die vorherige Anforderung zur Übermittlung der Seite wiederholt, so dass der Client (3), wenn die Variable nicht den Anfangswert aufweist, die bei der vorherigen Anforderung übermittelten Identifizierungsdaten (ÜbId, FeId) ein zweites Mal an den Server (1) übermittelt.

12. Datenträger mit einem auf dem Datenträger gespeicherten Computerprogramm (11) zur Durchführung eines Betriebsverfahrens nach einem der obigen Ansprüche.

13. Server mit einem Massenspeicher (5), in dem ein Computerprogramm (11) hinterlegt ist, so dass bei Aufruf des Computerprogramms (11) von dem Server ein Betriebsverfahren nach einem der Ansprüche 1 bis 11 ausführbar ist.

## Claims

1. Operating procedure for a server (1) that communicates with a client (3), wherein
- the server (1), when a request for a page is transmitted to it by the client (3), transmits the requested page to the client (3),
- the server (1) attaches identification data (ÜbId, FeId) to the page in such a way that, on a further request for a page by the client (3), the identification data (ÜbId, FeId) is transmitted back to the server (1) if, and only if, the request on the client (3) side comes from this transmission of the page,
- the identification data (ÜbId, FeId) contains at least one transmission identifier (ÜbId) specific to the transmission of the page,
- the server (1) saves the identification data (ÜbId) transmitted by it,
- the server (1), on receiving the further request, saves the transmission identifier (ÜbId) it has now transmitted instead of the transmission identifier (ÜbId) transmitted back, if the transmission identifier (ÜbId) transmitted back matches a saved transmission identifier (ÜbId), and
- the server (1), on receiving the additional request, saves the transmission identifier (ÜbId) it has now transmitted in addition to the transmission identifier (ÜbId) transmitted back, if the transmission identifier (ÜbId) transmitted back does not match any previously saved transmission identifier (ÜbId) .

2. Operating method according to Claim 1,
**characterized in that**
the identification data (ÜbId, FeId) is assigned selection data (SD), and that in the case of the transmission identifier (ÜbId) transmitted back matching one of the saved transmission identifiers (ÜbId), the page now transmitted to the client (3) by the server (1) on account of the further request depends on the selection data (SD) assigned to the matching transmission identifier (ÜbId).

3. Operating procedure according to Claim 2,
**characterized in that**
in the case of the transmission identifier (ÜbId) transmitted back not matching any of the saved transmission identifiers (ÜbId), the page now transmitted to the client (3) by the server (1) on account of the further request depends on the selection data (SD) assigned to one of the saved transmission identifiers (ÜbId), and that the server (1) assigns this selection data (SD) to the additionally saved transmission identifier (ÜbId).

4. Operating procedure according to Claim 1, 2 or 3,
**characterized in that**
- the identification data (ÜbId, FeId) also contains a window identifier (FeId),
- in the case of the transmission identifier (ÜbId) transmitted back matching one of the saved transmission identifiers (ÜbId), the server (1) retains the window identifier (FeId) of the matching transmission identifier (ÜbId), and
- in the case of the transmission identifier (ÜbId) transmitted back not matching any of the saved transmission identifiers (ÜbId), the server assigns a new window identifier (FeId) to the additionally saved transmission identifier (ÜbId).

5. Operating procedure according to Claim 3 and 4,
**characterized in that**
in the case of the transmission identifier (ÜbId) transmitted back not matching any of the saved transmission identifiers (ÜbId), the page now transmitted to the client (3) by the server (1) on account of a further request depends on the selection data (SD) that is assigned to that member of the saved transmission identifiers (ÜbId) whose window identifier (FeId) matches the window identifier (FeId) transmitted back.

6. Operating procedure according to any of the above claims,
**characterized in that**
the server (1) attaches the identification data (ÜbId, FeId) to the transmitted page as hidden input fields not included in the display on the client (3) side.

7. Operating procedure according to any of the above claims,
**characterized in that**
the page contains at least one address for a further page, and that the server (1) attaches the identification data (ÜbId, FeId) to the transmitted page as parameters assigned to the address.

8. Operating procedure according to any of the above claims,
**characterized in that**
the server (1), on receiving the further request, first transmits a third request to the client (3) to be sent back again to the server (1) by the client (3), and that the server (1) attaches the identification data (ÜbId, FeId) to the third request as assigned parameters.

9. Operating procedure according to any of the above claims,
**characterized in that**
the server (1), on receiving the further request, first transmits a third request to the client (3) to be sent back again to the server (1) by the client (3), that the server (1) attaches the identification data (ÜbId, FeId) to the third request as an attachment file, which is transmitted back with the third request to the server (1) by the client (3), and that the server (1) transmits to the client (3) along with the page transmitted to the client (3) on account of the third request, a delete command for this attachment file.

10. Operating procedure according to any of the above claims,
**characterized in that**
the server (1) attaches the identification data (ÜbId, FeId) to the page by attaching a program to the page, as a result of which the client (3) attaches an attachment file containing the identification data (ÜbId, FeId) to a request for a page if, and only if, the request comes from this transmission of the page.

11. Operating procedure according to any of the above claims,
**characterized in that**
- the server (1) also attaches to the page a variable containing a start value, and a program to be run by the client (3) on displaying the page in a window,
- as a result of the program, the client (3) changes the value of the variable, if it contains the start value, and
- as a result of the program, the client (3) repeats the previous request for transmitting the page, so that the client (3), if the variable does not contain the start value, transmits to the server (1) for a second time the identification data (ÜbId, FeId) transmitted with the previous request.

12. Data storage medium containing a computer program (11) stored on it for executing an operating procedure according to one of the above claims.

13. Server having a mass storage device (5), in which a computer program (11) is saved so that an operating procedure according to one of the claims 1 to 11 can be executed when the server opens the computer program (11).

## Revendications

1. Procédé d'exploitation d'un serveur (1) qui communique avec un client (3),
- le serveur (1), quand une demande de page lui est transmise par le client (3), transmettant la page demandée au client (3),
- le serveur (1) joignant à la page des données d'identification (ÜbId, FeId) de sorte que les données d'identification (ÜbId, FeId), lors d'une autre demande de page par le client (3), sont retransmises au serveur (1) si, et seulement si, la demande de pages du client (3) provient de cette transmission de la page,
- les données d'identification (ÜbId, FeId) comprenant au moins un identifiant de transmission (ÜbId) spécifique à la transmission de la page,
- le serveur (1) enregistrant les données d'identification (ÜbId) qui sont transmises par lui,
- le serveur (1), lors de la réception de l'autre demande, enregistrant l'identifiant de transmission (ÜbId) nouvellement transmis par lui à la place de l'identifiant de transmission (ÜbId) retransmis si l'identifiant de transmission (ÜbId) retransmis coïncide avec un identifiant de transmission (ÜbId) enregistré, et
- le serveur (1), lors de la réception de l'autre demande, enregistrant l'identifiant de transmission (ÜbId) nouvellement transmis par lui en plus de l'identifiant de transmission (ÜbId) retransmis, si l'identifiant de transmission (ÜbId) retransmis ne coïncide pas avec un identifiant de transmission (ÜbId) enregistré antérieurement.

2. Procédé d'exploitation selon la revendication 1,
**caractérisé en ce que** des données de sélection (SD) sont affectées aux données d'identification (ÜbId, FeId), et **en ce que**, en cas de coïncidence de l'identifiant de transmission (ÜbId) retransmis avec un des identifiants de transmission (ÜbId) enregistrés, la page nouvellement transmise au client par le serveur (1) en raison de l'autre demande dépend des données de sélection (SD) affectées à l'identifiant de transmission (ÜbId) qui coïncide.

3. Procédé d'exploitation selon la revendication 2,
**caractérisé en ce que**,
en cas de coïncidence de l'identifiant de transmission (ÜbId) retransmis avec aucun des identifiants de transmission (ÜbId) enregistrés, la page nouvellement transmise au client (3) par le serveur (1) en raison de l'autre demande dépend des données de sélection (SD) affectées à un des identifiants de transmission (ÜbId) enregistrés, et **en ce que** le serveur (1) affecte ces données de sélection (SD) à l'identifiant de transmission (ÜbId) enregistré à titre supplémentaire.

4. Procédé d'exploitation selon la revendication 1, 2 ou 3,
**caractérisé en ce que**
- les données d'identification (ÜbId, FeId) englobent également un identifiant de fenêtre (FeId),
- le serveur (1), en cas de coïncidence de l'identifiant de transmission (ÜbId) retransmis avec un des identifiants de transmission (ÜbId) enregistrés, conserve l'identifiant de fenêtre (FeId) de l'identifiant de transmission (ÜbId) qui coïncide et
- **en ce que** le serveur, en cas de coïncidence de l'identifiant de transmission (ÜbId) retransmis avec aucun des identifiants de transmission (ÜbId) enregistrés, affecte un nouvel identifiant de fenêtre (FeId) à l'identifiant de transmission (ÜbId) enregistré à titre supplémentaire.

5. Procédé d'exploitation selon la revendication 3 et 4,
**caractérisé en ce que**, en cas de coïncidence de l'identifiant de transmission (ÜbId) retransmis avec aucun des identifiants de transmission (ÜbId) enregistrés, la page transmise nouvellement au client (3) par le serveur (1) en raison d'une autre demande dépend des données de sélection (SD) qui sont affectées à celui des identifiants de transmission (ÜbId) enregistrés dont l'identifiant de fenêtre (FeId) coïncide avec l'identifiant de fenêtre (FeId) retransmis.

6. Procédé d'exploitation selon l'une des revendications ci-dessus,
**caractérisé en ce que**
le serveur (1) ajoute les données d'identification (ÜbId, FeId) de la page transmise en tant que zones d'entrée cachées, non affichées conjointement sur des pages du client (3).

7. Procédé d'exploitation selon l'une des revendications ci-dessus,
**caractérisé en ce que** la page contient au moins une adresse pour une autre page, et **en ce que** le serveur (1) ajoute les données d'identification (ÜbId, FeId) de la page transmise en tant que paramètres affectés à l'adresse.

8. Procédé d'exploitation selon l'une des revendications ci-dessus,
**caractérisé en ce que**
le serveur (1), lors de la réception de l'autre demande, transmet d'abord au client (3) une troisième demande devant être renvoyée par le client (3) de nouveau au serveur (1), et **en ce que** le serveur (1) ajoute les données d'identification (ÜbId, FeId) de la troisième demande en tant que paramètres affectés.

9. Procédé d'exploitation selon l'une des revendications ci-dessus,
**caractérisé en ce que**, lors de la réception de l'autre demande, le serveur (1) transmet d'abord au client (3) une troisième demande devant être renvoyée par le client (3) de nouveau au serveur (1), **en ce que** le serveur (1) ajoute les données d'identification (ÜbId, FeId) de la troisième demande en tant que fichier annexe qui est retransmis par le client (3) au serveur (1) avec la troisième demande, et **en ce que** le serveur (1), en même temps que la page transmise au client (3) en raison de la troisième demande, transmet au client (3) un ordre d'effacement pour ce fichier annexe.

10. Procédé d'exploitation selon l'une des revendications ci-dessus,
**caractérisé en ce que**
le serveur (1) ajoute les données d'identification (ÜbId, FeId) de la page en ajoutant à la page un programme sur la base duquel le client (3) ajoute à une demande de page un ficher annexe contenant les données d'identification (ÜbId, FeId) si, et uniquement si, la demande provient de cette transmission de la page.

11. Procédé d'exploitation selon l'une des revendications ci-dessus,
**caractérisé en ce que**
- le serveur (1) ajoute à la page également une variable avec une valeur initiale et un programme devant être exécuté par le client (3) lors de la représentation de la page dans une fenêtre,
- le client (3), sur la base du programme, modifie la valeur de la variable si elle présente la valeur initiale, et
- le client (3), sur la base du programme, répète la demande précédente de transmission de la page de sorte que le client (3), si la variable ne présente pas la valeur initiale, transmet une deuxième fois au serveur (1) les données d'identification (ÜbId, FeId) transmises lors de la demande précédentes.

12. Support de données avec un programme informatique (11) enregistré sur le support de données pour la réalisation d'un procédé d'exploitation selon l'une des revendications ci-dessus.

13. Serveur avec une mémoire de masse (5) dans laquelle un programme informatique (11) est archivé de sorte que, lors de l'appel du programme informatique (11) par le serveur, un procédé d'exploitation selon l'une des revendications 1 à 11 est exécutable.
